# EUROPÄISCHE PATENTANMELDUNG

(11) **EP 0 663 548 A1**
(43) Veröffentlichungstag der Anmeldung: **19.07.1995**
(21) Anmeldenummer: 94118163.8
(22) Anmeldetag: 18.11.1994
(51) Int. Cl.: F16J 9/20

(54) **Dichtungseinheit**

(30) Priorität: 04.12.1993 DE 4341386
(71) Anmelder: AE GOETZE GmbH, D-51399 Burscheid (DE)
(72) Erfinder: Junge, Klaus, Prof., D-51399 Burscheid (DE)

(57) **Zusammenfassung**

Die Erfindung betrifft eine Dichtungseinheit für Kolben von Brennkraftmaschinen. Zur Reduzierung der Schadstoffe im Abgas der Brennkraftmaschine ist im Feuerstegbereich des Kolbens (1) eine Ringnut (3) mit im Kolbenboden (6) auslaufender, konischer Flanke (4) vorgesehen, die es erlaubt, den Kolbenring (7, 7') mit einer Flanke (8) bis in Höhe des Kolbenbodens (6) anzuordnen.

## Beschreibung

Die Erfindung betrifft eine Dichtungseinheit für Kolben von Brennkraftmaschinen mit einer im Feuersteg des Kolbens angeordneten Ringnut zur Aufnahme eines Kolbenringes.

Gattungsgemäße Konstruktionen dienen dazu, Toträume im Verbrennungsraum so klein wie möglich zu halten, um den Anteil der unverbrannten Gase zu senken und damit die Abgasemission positiv zu beeinflussen. Das beim Betrieb von Brennkraftmaschinen entstehende Abgas besteht im wesentlichen aus dem mit der Verbrennungsluft zugeführten und an der Verbrennung unbeteiligten Stickstoff sowie aus Kolbendioxid und Wasser. Als eigentliche Schadstoffe werden die Kohlenwasserstoffe angesehen. Die Kohlenwasserstoffe im Abgas stammen aus Zonen, die nicht oder nur unvollständig von der Verbrennung erfaßt werden. Eine solche Zone ist zum Beispiel der Bereich oberhalb des ersten Kompressionsringes zwischen Kolben und Zylinderwand. Dieser Bereich wird am Kolben durch den Feuersteg definiert. Das im Feuerstegbereich nur unvollständig verbrannte Kraftstoff-Luft-Gemisch enthält die Schadstoffe, die allgemein im Abgas als HC-Emission bezeichnet werden. Um das Schadstoffvolumen im Feuerstegbereich zu minimieren werden die Spaltweiten zwischen Kolben und Zylinderbohrung möglichst klein gehalten, dabei dürfen jedoch gewisse Toleranzen nicht unterschritten werden, damit der Kolben nicht an die Zylinderwand stößt. Der verbleibende Spalt wurde bisher durch am Kolbenboden angeordnete, meistens L-förmige Kolbenringe verschlossen. Die Fachschrift K27 der Goetze AG zeigt einen solchen Kolbenring. Der Ring ist mit seinem unteren Schenkel in einer Ringnut mit entsprechendem Spiel axial und radial beweglich angeordnet. Ein längerer vertikaler Schenkel erstreckt sich in Richtung des Kolbenbodens und wird mit Hilfe einer am Kolbenringrücken angeordneten Schlauchfeder gegen die Zylinderwand gepreßt. Da der Ring eine stark unsymmetrische Querschnittsform aufweist, wird der Ring in der Nut stark vertwistet. Überdies ist durch die Schlauchfeder eine große radiale Nuttiefe erforderlich, so daß der Kolbenquerschnitt geschwächt wird.

Der Erfindung liegt die Aufgabe zugrunde, eine gattungsgemäße Dichtungseinheit im Hinblick auf die Abgasemission zu verbessern.

Diese Aufgabe wird erfindungsgemäß dadurch gelöst, daß die Ringnut eine konisch ausgebildete, im Kolbenboden auslaufende Nutflanke aufweist, mit der ein mit korrespondierender Flanke ausgebildeter Kolbenring in Gleitkontakt steht, derart, daß ein Bereich der Kolbenringflanke sich etwa bis in Höhe des Kolbenbodens erstreckt. Auf diese Weise ist es möglich, einen Kolbenring im Feuersteg einzusetzen, der nur geringfügig oder auch gar nicht vertwistet, wobei gleichzeitig die Nuttiefe klein gehalten werden kann. Je nach Kolbenringtyp kann es sinnvoll sein, innerhalb der Ringnut eine Stützfeder anzuordnen, die den Kolbenring axial gegen die konische Nutflanke preßt. Darüber hinaus kann der Kolbenring als spannungsloser Ring ausgebildet sein, d.h., der Ring besitzt keine radial nach außen oder inner wirkende Kraft. Die Anpressung an die Zylinderwand erfolgt ausschließlich durch auf den Ring einwirkende äußere Kraft, wie Massen-, Gas- oder Stützfederkräfte. Auf diese Weise wird erreicht, daß die bei einem unsymmetrischen Querschnitt auftretende Vertwistung des Kolbenringes vermieden wird. Durch die permanente Anlage des Kolbenringes an der im Kolbenboden auslaufenden oberen Nutflanke kann kein Kraftstoff-Luft-Gemisch hinter den Kolbenring gelangen, so daß absolut kein schädliches Spaltvolumen entstehen kann.

Alternativ kann die der konischen Nutflanke gegenüberliegende untere Nutflanke ebenfalls konisch verlaufen, so daß auf dieser Flanke ein zweiter Kolbenring mit korrespondierender Flanke eingesetzt werden kann. Vorzugsweise weist mindestens einer dieser Kolbenringe eine radial nach innen wirkende Kraft auf, wodurch der jeweils andere Ring über die konische Nutflanke radial gegen die Zylinderwand gepreßt wird.

Einem weiteren Gedanken der Erfindung gemäß ist zwischen dem ersten und zweiten Kolbenring eine radial nach innen spannende Stützfeder mit trapezförmigem Querschnitt angeordnet. Diese preßt die spiegelsymmetrischen Kolbenringe radial gegen die Zylinderwand.

Die Erfindung ist anhand eines Ausführungsbeispieles in der Zeichnung dargestellt und wird im folgenden näher erläutert. Es zeigen
Figur 1 erfindungsgemäßer Kolben im Halbschnitt
Figur 2 Ausschnitt eines Kolbens gemäß Figur 1 mit erfindungsgemäßem Kolbenring
Figur 3 alternative Ausbildung gemäß Figur 2
Figur 4 eine weitere Ausbildung gemäß Figur 3

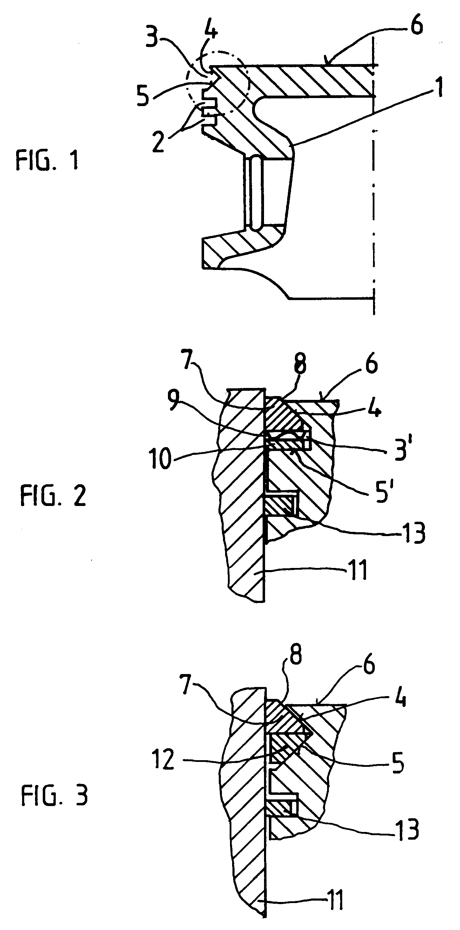

Die erfindungsgemäße Dichtungseinheit besteht aus einem Kolben (1) gemäß Figur 1 mit mehreren in den Ringnuten (2) für Kolbenringe (13). Der Kolben weist im oberen Bereich, d.h. im Feuerstegbereich, eine Ringnut (3) auf, die eine obere konische Flanke (4) und eine untere konische Flanke (5) besitzt. Die obere Flanke (4) läuft etwa im Kolbenboden (6) aus.

Wie aus der Figur 2 ersichtlich, kann die untere Flanke (5') auch horizontal verlaufen. In der auf diese Weise ausgebildeten Ringnut (3') erstreckt sich ein mit der Flanke (4) in Gleitkontakt stehender Kolbenring (7) mit ebenfalls konischer Flankenfläche (8).

Mit Hilfe einer Stützfeder (9), die sich über einen zweiten Kolbenring (10) axial abstützt, wird der Kolbenring (7) entlang der Flanke (4) gegen die Zylinderwand (11) gedrückt. Die im Kolbenboden (6) auslaufende Flanke (4) erlaubt, daß die Flanke (8) des Kolbenringes (7) bis etwa in Höhe des Kolbenbodens (6) sich erstreckt. Auf diese Weise ist das Volumen zwischen Zylinderwand (11) und Kolben (1) im Feuerstegbereich ausgefüllt, und es kann kein Kraftstoff-Luftgemisch in diesen Bereich eintreten. Die im Abgas sich ergebende HC-Emission wird hierdurch stark reduziert.

Die Figur 3 zeigt die Anordnung von spiegelsymmetrischen Kolbenringen (7, 12), wobei der untere Kolbenring (12) als radial innenspannender und der obere Kolbenring (7) als spannungsloser Kolbenring ausgebildet ist. Der untere Kolbenring (12) preßt den oberen Kolbenring (7) über die Flanken (4, 5) gegen die Zylinderwand (11).

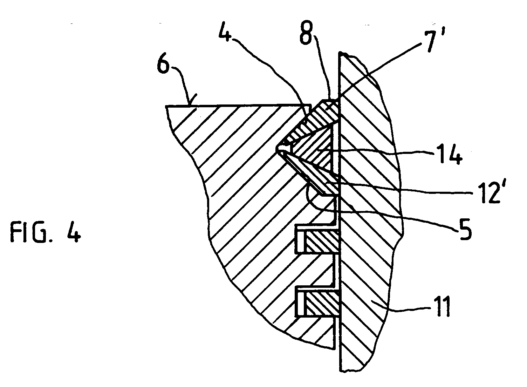

In der Figur 4 ist eine weitere Ausgestaltung der Erfindung dargestellt. Eine trapezförmige Stützfeder (14) stützt sich axial an korrespondierenden Flankenflächen der Kolbenringe (7', 12') ab und preßt diese aufgrund ihrer radial nach innen gerichteten Spannkraft axial auseinander, so daß sie entlang der Fankenfläche (4, 5) in Richtung der Zylinderwand (11) gedrückt werden.

## Patentansprüche

1. Dichtungseinheit für Kolben von Brennkraftmaschinen mit einer im Feuersteg des Kolbens angeordneten Ringnut zur Aufnahme eines Kolbenringes, dadurch gekennzeichnet, daß die Ringnut (3) eine konisch ausgebildete im Kolbenboden auslaufende obere Nutflanke (4) aufweist, mit der ein mit korrespondierender Flanke (8) ausgebildeter Kolbenring (7, 7') in Gleitkontakt steht, derart, daß ein Bereich der Kolbenringflanke (8) sich etwa bis in Höhe des Kolbenbodens (6) erstreckt.

2. Dichtungseinheit nach Anspruch 1, dadurch gekennzeichnet, daß innerhalb der Ringnut (3, 3') eine Stützfeder (9, 14) angeordnet ist, die den Kolbenring (7, 7') axial nach oben gegen die konische Nutflanke (4) preßt.

3. Dichtungseinheit nach den Ansprüchen 1 und 2, dadurch gekennzeichnet, daß der Kolbenring (7,7') als spannungsloser Ring ausgebildet ist.

4. Dichtungseinheit nach mindestens einem der Ansprüche 1 bis 3, dadurch gekennzeichnet, daß die der konischen Nutflanke (4) gegenüberliegende untere Flanke (5) ebenfalls konisch ausgebildet ist.

5. Dichtungseinheit nach mindestens einer der Ansprüche 1 bis 4, dadurch gekennzeichnet, daß auf der Flanke (5) ein zweiter mit korrespondierender Flanke ausgebildeter Kolbenring (12, 12') anliegt.

6. Dichtungseinheit nach mindestens einem der Ansprüche 1 bis 5, dadurch gekennzeichnet, daß einer der Kolbenringe (7, 12) radial nach innen spannend ausgebildet ist.

7. Dichtungseinheit nach mindestens einem der Ansprüche 1 bis 5, dadurch gekennzeichnet, daß axial zwischen dem ersten (7, 7') und zweiten (12, 12') Kolbenring eine radial nach innen spannende Stützfeder (14) angeordnet ist.

8. Dichtungseinheit nach Anspruch 7, dadurch gekennzeichnet, daß die Stützfeder (14) einen trapezförmigen Querschnitt aufweist.
